(19) Europäisches Patentamt
European Patent Office
Office européen des brevets

(11) **EP 2 127 989 A1**

(12) **EUROPEAN PATENT APPLICATION**

(43) Date of publication:
**02.12.2009 Bulletin 2009/49**

(51) Int Cl.:
*B60W 40/10* (2006.01)          *B60T 8/172* (2006.01)
*B60R 21/013* (2006.01)

(21) Application number: **09160541.0**

(22) Date of filing: **18.05.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br><br>(30) Priority: **28.05.2008 US 154909**<br><br>(71) Applicant: **Delphi Technologies, Inc.**<br>**Troy, Michigan 48007 (US)** | (72) Inventors:<br> • **Hac, Aleksander B.**<br>  **Dayton, OH 45419 (US)**<br> • **Sygnarowicz, Daniel**<br>  **32-830, Wojnicz (PL)**<br><br>(74) Representative: **Denton, Michael John**<br>**Delphi European Headquarters**<br>**64 avenue de la Plaine de France**<br>**BP 65059 Tremblay-en-France**<br>**95972 Roissy Charles de Gaulle Cedex (FR)** |

(54)     **Dynamic-based method of estimating the absolute roll angle of a vehicle body**

(57)     The absolute roll angle of a vehicle body (16) is estimated by blending two preliminary roll angle estimates (54) based on their frequency so that the blended estimate continuously favors the more accurate of the preliminary roll angle estimates. A first preliminary roll angle estimate based on the measured roll rate (22) is improved by initially compensating the measured roll rate for bias error (44) using roll rate estimates inferred from other measured parameters. And a second preliminary roll angle estimate is determined according to the sum of the road bank angle and the relative roll angle (46-52). The blended estimate is used to estimate the actual lateral acceleration (56), the lateral velocity and side-slip angle (58) of the vehicle (10), which are used in rollover detection and other various other control applications (34).

FIG. 3

**Description**

TECHNICAL FIELD

The present invention relates to estimation of the absolute roll angle of a vehicle body for side airbag deployment and/or brake control, and more particularly to an improved dynamic-based estimation method.

BACKGROUND OF THE INVENTION

A number of vehicular control systems including vehicle stability control (VSC) systems and rollover detection/ prevention systems utilize various sensed parameters to estimate the absolute roll angle of the vehicle body -- that is, the angle of rotation of the vehicle body about its longitudinal axis relative to the level ground plane. In addition, knowledge of absolute roll angle is required to fully compensate measured lateral accelerometer for the effects of gravity when the vehicle body is inclined relative to the level ground plane.

In general, the absolute roll angle of a vehicle must be estimated or inferred because it cannot be measured directly in a cost effective manner. Ideally, it would be possible to determine the absolute roll angle by simply integrating the output of a roll rate sensor, and in fact most vehicles equipped with VSC and/or rollover detection/prevention systems have at least one roll rate sensor. However, the output of a typical roll rate sensor includes some DC bias or offset that would be integrated along with the portion of the output actually due to roll rate. For this reason, many systems attempt to remove the sensor bias prior to integration. As disclosed in the U.S. Patent No. 6,542,792 to Schubert et al., for example, the roll rate sensor output can be dead-banded and high-pass filtered prior to integration. While these techniques can be useful under highly transient conditions where the actual roll rate signal is relatively high, they can result in severe under-estimation of roll angle in slow or nearly steady-state maneuvers where it is not possible to separate the bias from the portion of the sensor output actually due to roll rate.

A more effective approach, disclosed in the U.S. Patent Nos. 6,292,759 and 6,678,631 to Schiffmann, is to form an additional estimate of roll angle that is particularly reliable in slow or nearly steady-state maneuvers, and blend the two roll angle estimates based on specified operating conditions of the vehicle to form the roll angle estimate that is supplied to the VSC and/or rollover detection/prevention systems. In the Shiffmann patents, the additional estimate of roll angle is based on vehicle acceleration measurements, and a coefficient used to blend the two roll angle estimates has a nominal value except under rough-road or airborne driving conditions during which the coefficient is changed to take into account only the estimate based on the measured roll rate.

Of course, any of the above-mentioned approaches are only as good as the individual roll angle estimates. For example, the additional roll angle estimate used in the above-mentioned Schiffmann patents tends to be inaccurate during turning maneuvers. Accordingly, what is needed is a way of forming a more accurate estimate of absolute roll angle.

SUMMARY OF THE INVENTION

A method of operation for a vehicle having a body that rolls about a longitudinal axis relative to a level ground plane, comprising the steps of: determining a first preliminary estimate of a total roll angle of the vehicle body based on a signal produced by a roll rate sensor, said first preliminary estimate having an accuracy that is highest under transient conditions when a roll rate of the vehicle body is relatively high; determining a second preliminary estimate of the total roll angle based on a sum of an estimated bank angle of a road surface supporting the vehicle with respect to the level ground plane and an estimated relative roll angle of the vehicle body with respect to the road surface, said second preliminary estimate having an accuracy that is highest under near steady-state conditions when the roll angle of the vehicle body is relatively low; blending the first and second preliminary estimates of the total roll angle with blending coefficients to form a blended estimate of the total roll angle, where the blending coefficients are continuously variable according to a frequency of said first and second preliminary estimates so that the blended estimate favors the first preliminary estimate under the transient conditions and the second preliminary estimate under the near steady-state conditions; and controlling a vehicle system based on the blended estimate of the total roll angle.

The present invention is directed to an improved method of estimating the absolute roll angle of a vehicle body under any operating condition, including normal driving, emergency maneuvers, driving on banked roads and near rollover situations. The roll angle estimate is based on typically sensed parameters, including roll rate, lateral acceleration, yaw rate, vehicle speed, and optionally, steering angle and longitudinal acceleration. Roll rate sensor bias is identified by comparing the sensed roll rate with roll rate estimates inferred from other measured parameters for fast and accurate removal of the bias. A first preliminary estimate of roll angle is determined according to the sum of the road bank angle and the body roll angle relative to the road. The road bank angle is estimated based on a kinematic relationship involving lateral acceleration, yaw rate, vehicle speed, and steering wheel angle, and the roll angle relative to the road is estimated based on lateral acceleration and the vehicle roll gain. The final or blended estimate of roll angle is then determined by blending the first preliminary estimate with a second preliminary estimate based on the bias-corrected measure of roll rate. In the blending process, the relative weighting between two preliminary roll angle estimates depends on their frequency so that the final estimate continuously favors the more accurate of the preliminary estimates. The blended estimate is used for several purposes, including estimating the lateral velocity and side-slip angle of the vehicle.

BRIEF DESCRIPTION OF THE DRAWINGS

FIG. 1 is a diagram of a vehicle during a cornering maneuver on a banked road;
FIG. 2 is a diagram of a system for the vehicle of FIG. 1, including a microprocessor-based controller for carrying out the method of this invention; and
FIG. 3 is a flow diagram representative of a software routine periodically executed by the microprocessor-based controller of FIG. 2 for carrying out the method of this invention.

DESCRIPTION OF THE PREFERRED EMBODIMENT

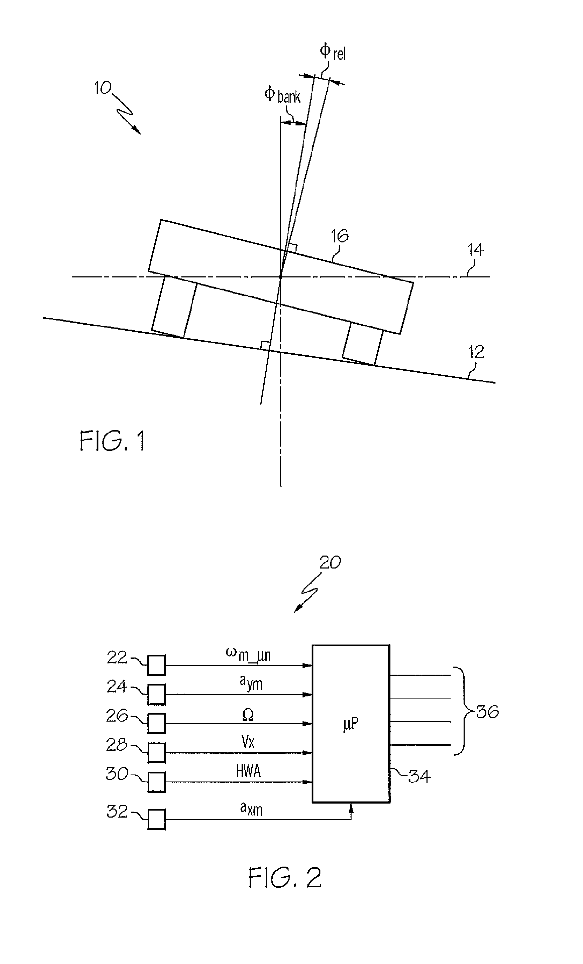

Referring to FIG. 1, the reference numeral 10 generally designates a vehicle being operated on a road surface 12. In the illustration, the road surface 12 is laterally inclined (i.e., banked) relative to the level ground plane 14 by an angle $\phi_{bank}$. Additionally, the body 16 of vehicle 10 has a roll angle $\phi_{rel}$ relative to the road surface 12 due to suspension and tire compliance. The total or absolute roll angle of vehicle body 16, denoted herein as $\phi_{tot}$, can therefore be expressed as:

$$\phi_{tot} = \phi_{bank} + \phi_{rel} \tag{1}$$

If the roll rate of vehicle 10 about its longitudinal axis is measured, an estimate $\phi_{e\omega}$ the total roll angle $\phi_{tot}$ can be determined in principle by integrating the measured roll rate, as follows:

$$\phi_{e\omega}(t) = \int_0^t \omega_m(\tau)d\tau \tag{2}$$

where $t$ denotes time and $\omega_m$ is the measured roll rate. Unfortunately, the output of a typical roll rate sensor includes some bias error that would be integrated along with the portion of the output actually due to roll rate. Thus, pure integration of the measured roll rate has infinite sensitivity to the bias error because the error is integrated over time. When dead-banding and high-pass (i.e., wash-out) filtering are used to compensate for the bias error, there is still a conflict between the immunity to bias and the ability to track slowly-varying (or constant) roll angles because the bias compensation also reduces the portion of the signal actually due to roll rate. As a result, a roll angle estimate based on roll rate integration is reasonably good during quick transient maneuvers, but less accurate during slow maneuvers or in nearly steady-state conditions when the roll angle changes slowly. As explained below, one aspect of the present invention is directed to an improved method of compensating for the bias error in a measured roll rate signal without substantially diminishing the portion of the signal actually due to roll rate.
An alternative way of determining the total roll angle $\phi_{tot}$ is to sum individual estimates of bank angle $\phi_{bank}$ and relative roll angle $\phi_{rel}$ in accordance with equation (1).
The relative roll angle $\phi_{rel}$ can be estimated as:

$$\phi_{rel} = -R_{gain}a_{ym} \tag{3}$$

where $a_{ym}$ is the lateral acceleration measured at the vehicle's center-of-gravity, and $R_{gain}$ is the roll gain of vehicle 10. The roll gain $R_{gain}$ can be estimated for a given vehicle as a function of the total roll stiffness of the suspension and tires, the vehicle mass, and distance from the road surface 12 to the vehicle's center-of-gravity.

The bank angle $\phi_{bank}$ can be estimated based on the kinematic relationship between lateral acceleration $a_{ym}$ and other measured parameters. Specifically, the lateral acceleration $a_{ym}$ can be expressed in terms of the total roll angle $\phi_{tot}$ as follows:

$$a_{ym} = \dot{V}_y + v_x \Omega - g \sin \phi_{tot} \qquad (4)$$

where $v_y$ is the lateral velocity of vehicle center-of-gravity, $v_x$ is the vehicle longitudinal velocity, $\Omega$ is vehicle yaw rate, and $g$ is the acceleration of gravity (9.806 m/s$^2$). The sign convention used in equation (4) assumes that lateral acceleration $a_{ym}$ and yaw rate $\Omega$ are positive in a right turn, but the roll angle $\phi_{tot}$ due to the turning maneuver is negative. The same sign convention is used in equation (3).

In most instances, $\sin\phi_{tot}$ can be closely approximated by the sum ($\phi_{rel} + \sin\phi_{bank}$) because $\phi_{rel}$ will be small (say, less than 7 degrees) and $\phi_{bank}$ will not exceed 15 degrees. Hence, equation (4) can be reformulated as:

$$a_{ym} + g\phi_{rel} = \dot{V}_y + v_x \Omega - g \sin \phi_{bank} \qquad (5)$$

In equation (5), the term ($\dot{V}_y$ Y + $v_x\Omega$) is the cornering component of the measured lateral acceleration $a_{ym}$, and the term ($-g \sin\phi_{bank}$) is the bank angle component of $a_{ym}$, also referred to herein as bank acceleration $a_{ybank}$. Therefore, the term on the left side of the equation -- that is, ($a_{ym} + g\phi_{rel}$) -- is the measured lateral acceleration compensated for the effect of relative roll angle $\phi_{rel}$, also referred to herein as $a_{ycomp}$.

If the derivative of lateral velocity (i.e., $\dot{V}_y$ ) is relatively small, the bank acceleration $a_{ybank}$ (that is, $-g \sin\phi_{bank}$) can be estimated by low-pass filtering the expression:

$$a_{ym} + g\phi_{rel} - v_x \Omega \quad \text{or} \quad a_{ycomp} - v_x \Omega \qquad (6)$$

Thus, bank angle $\phi_{bank}$ can be estimated using equation (6) in a system where $v_x$ and $\Omega$ are measured in addition to $a_{ym}$.

An advantage of estimating the total roll angle $\phi_{tot}$ as the sum of $\phi_{bank}$ and $\phi_{rel}$ per equation (1) is that $\phi_{rel}$ tends to be substantially larger than $\phi_{bank}$ in most driving conditions. This is significant because $\phi_{rel}$ is reasonably accurate in both steady-state and transient driving conditions, and this accuracy is reflected for the most part in the sum ($\phi_{bank} + \phi_{rel}$). Of course, in transient conditions on a significantly banked road, the estimation inaccuracy of $\phi_{bank}$ (due to the assumption that the derivative of lateral velocity is negligible) will also be reflected in the sum ($\phi_{bank} + \phi_{rel}$). Thus, the estimation of $\phi_{tot}$ based on equation (1) tends to be reasonably accurate except under transient conditions on a significantly banked road.

In summary, the foregoing methods of estimating absolute roll angle each have significant limitations that limit their usefulness. As explained above, a roll angle estimate based on roll rate integration is reasonably good during quick transient maneuvers, but less accurate during slow maneuvers or in nearly steady-state conditions when the roll angle changes slowly due to inability to separate the bias error from the portion of the signal actually due to roll rate. On the other hand, the roll angle estimate based on the sum of $\phi_{bank}$ and $\phi_{rel}$ according to equation (1) is reasonably good during nearly steady-state or low frequency maneuvers, and even during quick maneuvers performed on level roads, but unreliable during quick transient maneuvers performed on banked roads or when roll angle is induced by road bumps, which usually elicit fairly quick transient responses.

It can be seen from the above that the two roll angle estimation methods are complementary in that conditions that produce an unreliable estimate from one estimation method produce an accurate estimate from the other estimation method, and vice versa. Accordingly, the method of this invention blends both estimates in such a manner that the blended roll angle estimate is always closer to the initial estimate that is more accurate.

FIG. 2 is a diagram of an electronic control system 20 installed in vehicle 10 for enhancing vehicle stability and occupant safety. For example, the system 20 may include a vehicle stability control (VSC) system for dynamically activating the vehicle brakes to enhance stability and reduce the likelihood of rollover, and a supplemental restraint system (SRS) for deploying occupant protection devices such as seat belt pretensioners and side curtain air bags in response to detection of an impending rollover event. System sensors include a roll rate sensor 22 responsive to the time rate of angular roll about the vehicle longitudinal axis, a lateral acceleration sensor 24 responsive to the vehicle acceleration along its lateral axis, a yaw rate sensor 26 responsive to the time rate of yaw motion about the vehicle yaw axis, and at least one wheel speed sensor 28 for estimating the vehicle velocity along its longitudinal axis. Optionally, the system 20 additionally includes a hand-wheel sensor 30 responsive to the vehicle steering angle and a longitudinal acceleration sensor 32 responsive to the vehicle acceleration along its longitudinal axis. In practice, ordinary VSC systems include most if not all of the above sensors. Output signals produced by the sensors 22-32 are supplied to a microprocessor-based controller 34 which samples and processes the measured signals, carries out various control algorithms, and produces outputs 36 for achieving condition-appropriate control responses such as brake activation and deployment of occupant restraints. Of course, the depicted arrangement is only illustrative; for example, the functionality of controller 34 may be performed by two or more individual controllers if desired.

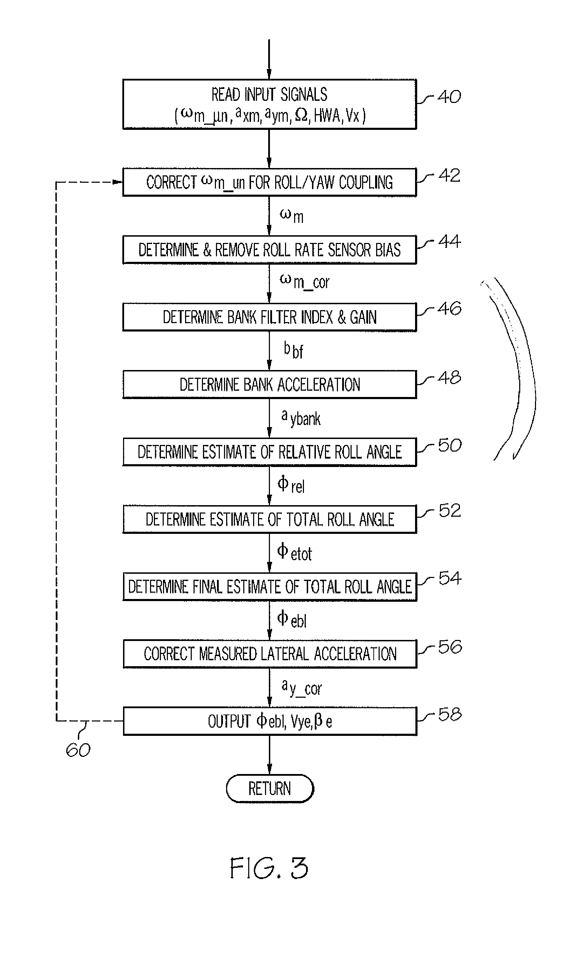

FIG. 3 depicts a flow diagram representative of a software routine periodically executed by the microprocessor-based controller 34 of FIG. 2 for carrying out the method of the present invention. The input signals read at block 40 of the flow diagram include measured uncompensated roll rate $\omega_{m\_un}$, measured lateral acceleration $a_{ym}$, yaw rate $\Omega$, vehicle speed $v_x$, and optionally, hand-wheel (steering) angle *HWA* and measured longitudinal acceleration $a_{xm}$. It is assumed for purposes of the present disclosure that the yaw rate $\Omega$ and lateral acceleration $a_{ym}$ input signals have already been compensated for bias error, as is customarily done in VSC systems. Furthermore, it is assumed that all the input signals have been low-pass filtered to reduce the effect of measurement noise.

Block 42 pertains to systems that include a sensor 32 for measuring longitudinal acceleration $a_{xm}$, and functions to compensate the measured roll rate $\omega_{m\_un}$ for pitching of vehicle 10 with respect to the horizontal plane 14. Pitching motion affects the roll rate detected by sensor 22 due to cross coupling between the yaw rate and roll rate vectors when the vehicle longitudinal axis is inclined with respect to the horizontal plane 14. This occurs, for example, during driving on a spiral ramp. Under such conditions the vertical yaw rate vector has a component along the longitudinal (i.e. roll) axis, to which sensor 22 responds. This component is not due to change in roll angle and should be rejected before the roll rate signal is further processed. In general, the false component is equal to the product of the yaw rate $\Omega$ and the tangent of the pitch angle $\theta$. The absolute pitch angle $\theta$ is estimated using the following kinematic relationship:

$$a_{xm} = \dot{v}_x - v_y \Omega + g \sin \theta \qquad (7)$$

where $a_{xm}$ is the measured longitudinal acceleration, $\dot{v}_x$ is the time rate of change in longitudinal speed $v_x$, $v_y$ is the vehicle's side-slip or lateral velocity, $\Omega$ is the measured yaw rate, and $g$ is the acceleration of gravity. Equation (7) can be rearranged to solve for pitch angle $\theta$ as follows:

$$\theta = \sin^{-1} \frac{a_{xm} - \dot{v}_x + v_y \Omega}{g} \qquad (8)$$

The term $\dot{v}_x$ is obtained by differentiating (i.e., high-pass filtering) the estimated vehicle speed $v_x$. If the lateral velocity $v_y$ is not available, the product $(v_y \Omega)$ can be ignored because it tends to be relatively small as a practical matter. However, it is also possible to use a roll angle estimate to estimate the lateral velocity $v_y$, and to feed that estimate back to the pitch angle calculation, as indicated by the dashed flow line 60. Also, the accuracy of the pitch angle calculation can be improved by magnitude limiting the numerator of the inverse-sine function to a predefined threshold such as 4 m/s$^2$. The magnitude-limited numerator is then low-pass filtered with, for example, a second-order filter of the form

$$b_{nf}^2 / (s^2 + 2\varsigma b_{nf} + b_{nf}^2),$$

where $b_{nf}$ is the undamped natural frequency of the filter and $\zeta$ is the damping ratio (example values are $b_{nf}$ = 3 rad/sec and $\zeta$ = 0.7). Also, modifications in the pitch angle calculation may be made during special conditions such as heavy braking when the vehicle speed estimate $v_x$ may be inaccurate. In any event, the result of the calculation is an estimated pitch angle $\theta_e$, which may be subjected to a narrow dead-zone to effectively ignore small pitch angle estimates. Of course, various other pitch angle estimation enhancements may be used, and additional sensors such as a pitch rate sensor can be used to estimate $\theta$ by integration.

Once the pitch angle estimate $\theta_e$ is determined, the measured roll rate is corrected by adding the product of the yaw rate $\Omega$ and the tangent of the pitch angle $\theta_e$ to the measured roll rate $\omega_{m\_un}$ form the pitch-compensated roll rate $\omega_m$ as follows:

$$\omega_m = \omega_{m\_un} + \Omega \tan\theta_e \qquad (9)$$

Since in nearly all cases, the pitch angle $\theta_e$ is less than 20° or so, equations (8) and (9) can be simplified by assuming that $\sin\theta \cong \tan\theta \cong \theta$. And as mentioned above, the measured roll rate $\omega_{m\_un}$ can be used as the pitch-compensated roll rate $\omega_m$ if the system 20 does not include the longitudinal acceleration sensor 32.

Block 44 is then executed to convert the roll rate signal $\omega_m$ into a bias-compensated roll rate signal $\omega_{m\_cor}$ suitable for integrating. In general, this is achieved by comparing $\omega_m$ with two or more roll rate estimates obtained from other sensors during nearly steady-state driving to determine the bias, and then gradually removing the determined bias from $\omega_m$.

A first roll rate estimate $\omega_{eay}$ is obtained by using equation (3) to calculate a roll angle $\phi_{eay}$ corresponding to the measured lateral acceleration $a_{ym}$, and differentiating the result. However, $a_{ym}$ is first low-pass filtered to reduce the effect of measurement noise. Preferably, the filter is a second-order filter of the form $b_{nf}^2 / (s^2 + 2\varsigma b_{nf} + b_{nf}^2)$, where $b_{nf}$ is the un-damped natural frequency of the filter and $\zeta$ is the damping ratio (example values are $b_{nf} = 20$ rad/s and $\zeta = 0.7$). And differentiation of the calculated roll angle $\phi_{eay}$ is achieved by passing $\phi_{eay}$ through a first-order high-pass filter of the form $b_f s/(s+b_f)$, where $b_f$ is the filter cut off frequency (an example value is $b_f = 20$ rad/sec). This high-pass filter can be viewed as a combination of a differentiator, s, and a low-pass filter, b/(s + b).

A second roll rate estimate $\omega_{ek}$ is obtained by using the kinematic relationship of equation (4) to calculate a roll angle $\phi_{ek}$ and differentiating the result. The derivative of lateral velocity, $\dot{v}_y$, is neglected since near steady-state driving conditions are assumed. Accordingly, $\phi_{ek}$ is given as:

$$\phi_{ek} = \sin^{-1} \frac{\left(v_x\Omega - a_{ym}\right)_{filt}}{g} \qquad (10)$$

As indicated in the above equation, the numerator $(v_x\Omega - a_{ym})$ of the inverse sine function is also low-pass filtered, preferably with the same form of filter used for $a_{ym}$ in the preceding paragraph. As a practical matter, the inverse sine function can be omitted since the calculation is only performed for small roll angles (less than 3° or so). Differentiation of the calculated roll angle $\phi_{ek}$ to produce a corresponding roll rate $\omega_{ek}$ is achieved in the same way as described for roll angle $\phi_{eay}$ in the preceding paragraph.

Once the roll rate estimates $\omega_{eay}$ and $\omega_{ek}$ have been calculated, a number of tests are performed to determine their stability and reliability. First, the absolute value of each estimate must be below a threshold value for at least a predefined time on the order of 0.3 - 0.5 sec. Second, the absolute value of their difference (that is, $|\omega_{eay} - \omega_{ek}|$) must be below another smaller threshold value for at least a predefined time such as 0.3 - 0.5 sec. And finally, the absolute value of the difference between the measured lateral acceleration and the product of yaw rate and vehicle speed (that is, $|a_{ym} - v_x\Omega|$) must be below a threshold value such as 1 m/sec$^2$ for at least a predefined time such as 0.3 - 0.5 sec. Instead requiring the conditions to be met for a predefined time period, it is sufficient to require that the signal magnitudes have a rate of change that is lower than a predefined rate.

When the above conditions are all satisfied, the roll rate estimates $\omega_{eay}$ and $\omega_{ek}$ are deemed to be sufficiently stable and reliable, and sufficiently close to each other, to be used for isolating the roll rate sensor bias error. In such a case, inconsistencies between the estimated roll rates and the measured roll rate are considered to be attributable to roll rate sensor bias error. First, the difference $\Delta\omega_{m\_ay}$ between the measured roll rate $\omega_m$ and the estimated roll rate

$\omega_{eay}$ is computed and limited in magnitude to a predefined value such as 0.14 rad/sec to form a limited difference $\Delta\omega_{m\_ay\_lim}$. Then the roll rate sensor bias error $\omega_{bias}$ is calculated (and subsequently updated) using the following low-pass filter function:

$$\omega_{bias}(t_{i+1}) = (1-b\Delta t)\omega_{bias}(t_i) + b\Delta t\Delta\omega_{m\_ay\_lim}(t_i) \qquad (11)$$

where $t_{i+1}$ denotes the current value, $t_i$ denotes a previous value, $b$ is the filter cut off frequency (0.3 rad/sec, for example), and $\Delta t$ is the sampling period. The initial value of $\omega_{bias}$ (that is, $\omega_{bias}(t_i)$) is either zero or the value of $\omega_{bias}$ from a previous driving cycle. The roll rate bias error $\omega_{bias}$ is periodically updated so long as the stability and reliability conditions are met, but updating is suspended when one or more of the specified conditions is not satisfied. As a practical matter, updating can be suspended by setting $b = 0$ in equation (11) so that $\omega_{bias}(t_{i+1}) = \omega_{bias}(t_i)$. Finally, the calculated bias error $\omega_{bias}$ is subtracted from the measured roll rate $\omega_m$, yielding the corrected roll rate $\omega_{m\_cor}$. And if desired, a narrow dead-band may be applied to $\omega_{m\_cor}$ to minimize any remaining uncompensated bias.

The blocks 46 and 48 are then executed to estimate bank acceleration $a_{ybank}$ by calculating a low-pass filtered version of expression (6) similar to the calculation of $\omega_{bias}$ in equation (11). Since expression (6) assumes that the derivative of lateral velocity is negligible, the block 46 first determines a bank filter index $bfi$ that reflects the degree to which this assumption is correct, and the low-pass filter gain $b_{bf}$ depends on the index $bfi$. In general, the index $bfi$ has a value of one when vehicle 10 is in nearly steady-state condition in terms of yaw motion, and a value of zero when vehicle 10 is in a transient yaw maneuver. When $bfi$ has a value of one, the filter gain $b_{bf}$ is relatively high for rapid updating the bank acceleration estimate; but when $bfi$ has a value of zero, the filter gain $b_{bf}$ is relatively low for slow updating the bank acceleration estimate.

Three conditions are checked to determine whether vehicle 10 is in a nearly steady-state condition in terms of yaw motion. First, magnitude of the rate of change in hand wheel angle (*HWA*) must be below a threshold value such as 30 deg/sec$^2 \cong 0.52$ rad/sec. As a practical matter, rate of change in *HWA* can be obtained by passing *HWA* through a high-pass filter function of the form bs /(s+ b) where s is the Laplace operand and b is the filter's cut off frequency. If the input *HWA* is not available, an alternate condition is that the rate of change of measured lateral acceleration $a_{ym}$ must be below a threshold such as 5.0 m/sec$^3$. Second, the magnitude of the product of vehicle speed and yaw rate (i.e., $|v_x\Omega|$) must be below a threshold value such as 4 m/sec$^2$. And third, the magnitude of the rate of change of the product of vehicle speed and yaw rate (that is, $|d(v_x\Omega)/dt|$) must be below a threshold such as 3 m/sec$^2$. Here again, the rate of change of the product $v_x\Omega$ can be obtained by passing $v_x\Omega$ through a high-pass filter function of the form bs /(s+ b) where s is the Laplace operand and b is the filter's cut off frequency. If the three conditions are all satisfied for a specified time period such as 0.5 sec., vehicle 10 is deemed to be in a steady-state condition, and the bank filter index $bfi$ is set to one to establish a relatively high filter gain $b_{bf}$ such as 1.0 rad/sec. Otherwise, the bank filter index $bfi$ is set to zero to establish a relatively low filter gain $b_{bf}$ such as 0.25 rad/sec.

As explained above, the bank acceleration $a_{ybank}$ is the component of the measured lateral acceleration $a_{ym}$ due to bank angle $\phi_{bank}$, and is equal to $- g\sin\phi_{bank}$. Also, $a_{ycomp}$ is the measured lateral acceleration, compensated for the effect of relative roll angle $\phi_{rel}$, and is equal to $(a_{ym} + g\phi_{rel})$. In general, the bank acceleration $a_{ybank}$ is estimated according to the difference between $a_{ycomp}$ and the product $v_x\Omega$, and then used to solve for bank angle $\phi_{bank}$. In view of equation (3), $a_{ycomp}$ can be expressed as:

$$a_{ycomp} = (1 - gR_{gain})a_{ym} \qquad (12)$$

where $R_{gain}$ is the roll gain of vehicle 10 in radians of roll angle per 1 m/sec$^2$ of lateral acceleration. The difference $d_{av\Omega}$ between $a_{ycomp}$ and the product $v_x\Omega$ is magnitude limited to a value such as 5 m/sec$^2$, and the limited difference $d_{av\Omega\_lim}$ is then passed through a low-pass filter with the filter gain $b_{bf}$ determined at block 46 to determine the bank acceleration $a_{ybank}$. The discrete-time form of the low-pass filter equation is given as:

$$a_{ybank}(t_{i+1}) = (1 - b_{bf}\Delta t)a_{ybank}(t_i) + b_{bf}\Delta t d_{av\Omega\_\lim}(t_{i+1}) \qquad (13)$$

where $t_{i+1}$ denotes the current value, $t_i$ denotes a previous value, and $\Delta t$ is the sampling period. It will be noted that the filter gain term $b_{bf}$ operates on the limited difference $d_{av\Omega\_lim}$ so that the filter is updated quickly during nearly steady-state conditions when $b_{bf}$ is large (i.e., $bfi = 1$) and slowly during transient maneuvers when $b_{bf}$ is small (i.e., $bfi = 0$). And once $a_{ybank}$ is known, the corresponding bank angle estimate $\phi_{ebank}$ is determined according to:

$$\phi_{ebank} = \sin^{-1}\left(\frac{-a_{ybank}}{g}\right) \qquad (14)$$

Block 50 then determines an estimate $\phi_{erel}$ of relative roll angle $\phi_{rel}$ using the measured lateral acceleration $a_{ym}$. In steady-state maneuvers the relative roll angle $\phi_{rel}$ is given by the product ($-R_{gain}a_{ym}$), where $R_{gain}$ is the roll gain of vehicle 10 in radians of roll angle per 1 m/sec$^2$ of lateral acceleration. This relationship is also reasonably accurate during transient maneuvers except in cases where the roll mode of the vehicle is significantly under-damped. In those cases, the roll gain $R_{gain}$ can be modified by a dynamic second order filter that models the vehicle's roll mode. For example, the filter may be of the form $-R_{gain}b_{nf}^2/(s^2 + 2\varsigma b_{nf} + b_{nf}^2)$ where $b_{nf}$ is the undamped natural frequency of the vehicle's roll mode and $\zeta$ is the damping ratio.

Blocks 52 and 54 then determine the total roll angle $\phi_{tot}$. First, block 52 determines the estimated total roll angle $\phi_{etot}$ according to the sum of the estimated bank angle $\phi_{ebank}$ and the estimated relative roll angle $\phi_{erel}$. Then block 54 determines a blended estimate $\phi_{ebl}$ of the total roll angle by blending $\phi_{etot}$ with a roll angle determined by integrating the bias-compensated roll rate measurement $\omega_{m\_cor}$. To avoid explicitly integrating $\omega_{m\_cor}$, the terms $\omega_{m\_cor}$, $\phi_{etot}$ and $\dot{\phi}_{ebl}$ can be combined with a blending factor $b_{bl\_f}$ in a differential equation as follows:

$$\dot{\phi}_{ebl} + b_{bl\_f}\phi_{ebl} = b_{bl\_f}\phi_{etot} + \omega_{m\_cor} \qquad (15)$$

Representing equation (15) in the Laplace domain, and solving for the blended roll angle estimate $\phi_{ebl}$ yields:

$$\phi_{ebl} = \frac{b_{bl\_f}}{s + b_{bl\_f}}\phi_{etot} + \frac{1}{s + b_{bl\_f}}\omega_{m\_cor} \qquad (16)$$

which in practice is calculated on a discrete-time domain basis as follows:

$$\phi_{ebl}(t_{i+1}) = (1 - b_{bl\_f}\Delta t)[\phi_{ebl}(t_i) + \Delta t\omega_{m\_cor}(t_{i+1})] + b_{bl\_f}\Delta t\phi_{etot}(t_{i+1}) \qquad (17)$$

where $t_{i+1}$ denotes the current value, $t_i$ denotes a previous value, $\Delta t$ is the sampling period, and the blending factor $b_{bl\_j}$ is assigned a calibrated value, such as 0.244 rad/sec. If the roll angle obtained by integrating $\omega_{m\_cor}$ is denoted by $\phi_{\omega}$, the blended roll angle estimate $\phi_{ebl}$ may be equivalently expressed as:

$$\phi_{ebl} = \frac{b_{bl\_f}}{s + b_{bl\_f}} \phi_{etot} + \frac{s}{s + b_{bl\_f}} \phi_{\omega} \qquad (18)$$

In this form, it is evident that the blended roll angle estimate $\phi_{ebl}$ is a weighted sum of $\phi_{etor}$ and $\phi_{\omega}$, with the weight dependent on the frequency of the signals (designated by the Laplace operand "s") so that the blended estimate $\phi_{ebl}$ is always closer to the preliminary estimate that is most reliable at the moment. During steady-state conditions, the body roll rate is near-zero and the signal frequencies are also near-zero. Under such steady-state conditions, the coefficient of $\phi_{etot}$ approaches one and the coefficient of $\phi_{\omega}$ approaches zero, with the result that $\phi_{etot}$ principally contributes to $\phi_{ebl}$. During transient conditions, on the other hand, the body roll rate is significant, and the signal frequencies are high. Under such transient conditions, the coefficient of $\phi_{etor}$ approaches zero and the coefficient of $\phi_{\omega}$ approaches one, with the result that $\phi_{\omega}$ principally contributes to $\phi_{ebl}$.

Block 56 is then executed to compensate the measured lateral acceleration $a_{ym}$ for the gravity component due to roll angle. The corrected lateral acceleration $a_{ycor}$ is given by the sum ($a_{ym}$ + $g\sin\phi_{ebl}$), where $\phi_{ebl}$ is the blended roll angle estimate determined at block 54. The corrected lateral acceleration $a_{ycor}$ can be used in conjunction with other parameters such as roll rate and vehicle speed for detecting the onset of a rollover event.

Finally, block 58 is executed to use the blended roll angle estimate $\phi_{ebl}$ to estimate other useful parameters including the vehicle side slip (i.e., lateral) velocity $v_y$ and side-slip angle $\beta$. The derivative of lateral velocity can alternately be expressed as ($a_y$ - $v_x\Omega$) or ($a_{ym}$ + $g \sin \phi$ - $v_x\Omega$), where $a_y$ in the expression ($a_y$ - $v_x\Omega$) is the actual lateral acceleration, estimated above as corrected lateral acceleration $a_{ycor}$. Thus, the derivative of lateral velocity may be calculated using $a_{ycor}$ for $a_y$ in the expression ($a_y$ - $v_x\Omega$), or using the blended roll angle estimate $\phi_{ebl}$ for $\phi$ in the expression ($a_{ym}$ + $g \sin \phi$ - $v_x\Omega$). Integrating either expression then yields a reasonably accurate estimate $v_{ye}$ of side slip velocity $v_y$, which can be supplied to block 42 for use in the pitch angle calculation, as indicated by the broken flow line 60. And once the side-slip velocity estimate $v_{ye}$ has been determined, the side-slip angle $\beta$ at the vehicle's center of gravity is calculated as:

$$\beta = \tan^{-1} \frac{v_{ye}}{v_x} \qquad (19)$$

In summary, the present invention provides a novel and useful way of accurately estimating the absolute roll angle of a vehicle body by blending under any vehicle operating condition. The preliminary roll angle estimates contributing to the blended roll angle are based on typically sensed parameters, including roll rate, lateral acceleration, yaw rate, vehicle speed, and optionally, steering angle and longitudinal acceleration. The preliminary roll angle estimate based on the measured roll rate is improved by initially compensating the roll rate signal for bias error using roll rate estimates inferred from other measured parameters. The other preliminary roll angle estimate is determined according to the sum of the road bank angle and the relative roll angle, with the bank angle being estimated based on the kinematic relationship among lateral acceleration, yaw rate and vehicle speed, and the relative roll angle being estimated based on lateral acceleration and the roll gain of the vehicle. The blended estimate of roll angle utilizes a blending factor that varies with the frequency of the preliminary roll angle signals so that the blended estimate continuously favors the more accurate of the preliminary roll angle estimates. The blended estimate is used to estimate the actual lateral acceleration, the lateral velocity and side-slip angle of the vehicle, all of which are useful in applications such as rollover detection and vehicle stability control.

While the present invention has been described with respect to the illustrated embodiment, it is recognized that numerous modifications and variations in addition to those mentioned herein will occur to those skilled in the art. For example, the preliminary estimate of relative roll angle $\phi_{rel}$ may be obtained from suspension deflection sensors instead of equation (3) if such sensors are available. Also, the lateral velocity may be determined using a model-based (i.e., observer) technique with the corrected lateral acceleration $a_{ycor}$ as an input, instead of integrating the estimated derivative of lateral velocity. Finally, it is also possible to apply the blending method of this invention to estimation of absolute pitch angle $\theta$ in systems including a pitch rate sensor; in that case, a first preliminary pitch angle estimate would be obtained by integrating a bias-compensated measure of the pitch rate, and a second preliminary pitch angle estimate would be obtained from equation (8). Of course, other modifications and variations are also possible. Accordingly, it is intended that the invention not be limited to the disclosed embodiment, but that it have the full scope permitted by the language of the following claims.

**EP 2 127 989 A1**

**Claims**

1. A method of operation for a vehicle (10) having a body (16) that rolls about a longitudinal axis relative to a level ground plane (14), comprising the steps of:

   determining a first preliminary estimate of a total roll angle of the vehicle body (16) based on a signal produced by a roll rate sensor (22), said first preliminary estimate having a high accuracy under transient conditions;
   determining a second preliminary estimate of the total roll angle based on a sum of an estimated bank angle of a road surface (12) supporting the vehicle (10) with respect to the level ground plane (14) and an estimated relative roll angle of the vehicle body (16) with respect to the road surface (12), said second preliminary estimate having a high accuracy under near steady-state conditions;
   blending the first and second preliminary estimates of the total roll angle with blending coefficients to form a blended estimate of the total roll angle, where the blending coefficients are continuously variable according to a frequency of said first and second preliminary estimates so that the blended estimate favors the first preliminary estimate under the transient conditions and the second preliminary estimate under the near steady-state conditions (54); and
   controlling (58) a vehicle system (34) based on the blended estimate of the total roll angle.

2. The method of claim 1, including the steps of:

   determining a bias error (44) in the signal produced by the roll rate sensor (22); and
   removing the determined bias error from the signal produced by the roll rate sensor (22) before determining said first preliminary estimate of the total roll angle (44).

3. The method of claim 2, where the step of determining the bias error in the signal produced by the roll rate sensor includes the steps of:

   determining at least one auxiliary roll rate estimate based on sensed parameters other than the roll rate during the steady-state conditions (44);
   determining a difference between the auxiliary roll rate estimate and the signal produced by the roll rate sensor (44);
   limiting a magnitude of said difference to form a limited difference (44); and
   determining said bias error by low-pass filtering said limited difference (44).

4. The method of claim 3, where the step of determining at least one auxiliary roll rate estimate includes the steps of:

   determining a roll angle estimate based on sensed parameters other than the roll rate during the steady-state conditions; and
   differentiating the determined roll angle estimate to form the auxiliary roll rate estimate.

5. The method of claim 1, including the steps of:

   measuring (24) a lateral acceleration of said vehicle body (16); and
   determining (50) the estimated relative roll angle of the vehicle body (16) based on a product of the measured a lateral acceleration and a known roll gain of the vehicle (10).

6. The method of claim 1, including the steps of:

   measuring (24, 26) a lateral acceleration and a yaw rate of said vehicle body (16);
   estimating (28) a longitudinal velocity of said vehicle (10); and
   using the measured lateral acceleration and yaw rate and the estimated longitudinal velocity to determine a bank component of the measured lateral acceleration that is due to the bank angle (46, 48); and
   estimating the bank angle based on the determined bank component of the measured lateral acceleration (46, 48).

7. The method of claim 6, including the steps of:

   compensating the measured lateral acceleration for effects of the relative roll angle (46, 48);

determining a difference between the compensated measured lateral acceleration and a product of the measured yaw rate and the estimated longitudinal velocity (46, 48);
limiting a magnitude of said difference to form a limited difference (46, 48); and
passing said limited difference through a low-pass filter to determine said bank component (46, 48).

8. The method of claim 7, where said low-pass filter has a gain term than determines a rate at which said limited difference passes through said low pass filter, and the method includes the step of:

setting said gain term to a first value for passing said limited difference through said low pass filter at a high rate when a yaw motion of the vehicle body (16) is relatively low, and otherwise setting said gain term to a second value for passing said limited difference through said low pass filter at a low rate (46).

9. The method of claim 1, including the steps of:

measuring (24) a lateral acceleration of the vehicle body (16); and
compensating the measured lateral acceleration for a gravity component due to the blended estimate of the total roll angle (56); and
controlling (58) the vehicle system (34) based on compensated lateral acceleration.

10. The method of claim 1, including the steps of:

determining a lateral velocity of the vehicle body (16) based on the blended estimate of the total roll angle (58); and
controlling (58) the vehicle system based on determined lateral velocity.

11. The method of claim 10, including the steps of:

determining (42) a pitch angle of the vehicle body (16) based on the determined lateral velocity, measures (32, 26) of longitudinal acceleration and yaw rate of the vehicle body, and an estimated longitudinal velocity (28) of the vehicle (10);
compensating the signal produced by the roll rate sensor (22) due to the determined pitch angle (42); and
determining said first preliminary estimate of the total roll angle based on the compensated roll rate sensor signal (44, 54).

12. The method of claim 10, including the step of:

determining (58) a side-slip angle of the vehicle (10) based on the determined lateral velocity and an estimate (28) of a longitudinal velocity of the vehicle (10); and
controlling (58) the vehicle system (34) based on determined side-slip angle.

FIG. 1

FIG. 2

READ INPUT SIGNALS
$(\omega_{m\_\mu n}, a_{xm}, a_{ym}, \Omega, HWA, V_x)$ — 40

CORRECT $\omega_{m\_un}$ FOR ROLL/YAW COUPLING — 42

$\omega_m$

DETERMINE & REMOVE ROLL RATE SENSOR BIAS — 44

$\omega_{m\_cor}$

DETERMINE BANK FILTER INDEX & GAIN — 46

$b_{bf}$

DETERMINE BANK ACCELERATION — 48

$a_{ybank}$

DETERMINE ESTIMATE OF RELATIVE ROLL ANGLE — 50

$\phi_{rel}$

DETERMINE ESTIMATE OF TOTAL ROLL ANGLE — 52

$\phi_{etot}$

DETERMINE FINAL ESTIMATE OF TOTAL ROLL ANGLE — 54

$\phi_{ebl}$

CORRECT MEASURED LATERAL ACCELERATION — 56

$a_{y\_cor}$

OUTPUT $\phi_{ebl}, V_{ye}, \beta_e$ — 58

60

RETURN

FIG. 3

13

Europäisches
Patentamt
European
Patent Office
Office européen
des brevets

**EUROPEAN SEARCH REPORT**

Application Number

EP 09 16 0541

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 346 856 A (FORD GLOBAL TECH INC [US]) 24 September 2003 (2003-09-24) * page 5, paragraph 40 - page 6, paragraph 48 * | 1,6 | INV. B60W40/10 B60T8/172 B60R21/013 |
| Y | | 2-5,7-12 | |
| Y | DE 10 2006 061483 A1 (CONTINENTAL TEVES AG & CO OHG [DE]) 23 August 2007 (2007-08-23) * page 6, paragraph 55 - page 7, paragraph 65 * | 1,6 | |
| Y | DE 10 2004 035576 A1 (DAIMLER CHRYSLER AG [DE]) 16 February 2006 (2006-02-16) * page 5, paragraph 41 - page 5, paragraph 42 * | 1,6 | |
| Y | US 2003/055549 A1 (BARTA DAVID JOHN [US] ET AL) 20 March 2003 (2003-03-20) * page 6, paragraph 92 - page 7, paragraph 98; figure 7 * | 2-5 | |
| Y | US 6 195 606 B1 (BARTA DAVID JOHN [US] ET AL) 27 February 2001 (2001-02-27) * column 3, line 43 - column 4, line 34 * * column 10, line 13 - column 11, line 11; figure 5 * | 7,8,12 | TECHNICAL FIELDS SEARCHED (IPC) B60W B60T B60R |
| Y | EP 1 219 500 A (TOYOTA MOTOR CO LTD [JP]) 3 July 2002 (2002-07-03) * page 5, paragraph 32 - page 6, paragraph 37 * * page 13, paragraph 105 * | 9,10 | |
| Y | US 2006/235575 A1 (BROWN TODD [US] ET AL) 19 October 2006 (2006-10-19) * page 3, paragraph 41 - page 4, paragraph 49 * | 11,12 | |

-/--

The present search report has been drawn up for all claims

| Place of search | Date of completion of the search | Examiner |
|---|---|---|
| Munich | 11 September 2009 | Marx, Winfried |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 127 989 A1**

**EUROPEAN SEARCH REPORT**

Application Number

EP 09 16 0541

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2002/173882 A1 (TOBARU SHIGEO [JP] ET AL) 21 November 2002 (2002-11-21) * page 9, paragraph 115 - page 10, paragraph 117; figure 17 * ----- | 1-10 | |
| A | WO 2007/107935 A (KONINKL PHILIPS ELECTRONICS NV [NL]; PEETERS FELIX G P [NL]; GOOSSENS) 27 September 2007 (2007-09-27) * page 5, line 16 - page 6, line 25 * ----- | 1-10 | |

TECHNICAL FIELDS
SEARCHED      (IPC)

The present search report has been drawn up for all claims

| Place of search | Date of completion of the search | Examiner |
|---|---|---|
| Munich | 11 September 2009 | Marx, Winfried |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

15

**EP 2 127 989 A1**

### ANNEX TO THE EUROPEAN SEARCH REPORT
### ON EUROPEAN PATENT APPLICATION NO.

EP 09 16 0541

11-09-2009

| Patent document cited in search report | | Publication date | Patent family member(s) | | Publication date |
|---|---|---|---|---|---|
| EP 1346856 | A | 24-09-2003 | US | 2003182025 A1 | 25-09-2003 |
| DE 102006061483 | A1 | 23-08-2007 | EP | 1989086 A1 | 12-11-2008 |
| | | | WO | 2007096319 A1 | 30-08-2007 |
| | | | US | 2009222164 A1 | 03-09-2009 |
| DE 102004035576 | A1 | 16-02-2006 | WO | 2006010466 A1 | 02-02-2006 |
| US 2003055549 | A1 | 20-03-2003 | US | 2006030991 A1 | 09-02-2006 |
| US 6195606 | B1 | 27-02-2001 | NONE | | |
| EP 1219500 | A | 03-07-2002 | DE | 60104638 D1 | 09-09-2004 |
| | | | DE | 60104638 T2 | 11-08-2005 |
| | | | JP | 3518509 B2 | 12-04-2004 |
| | | | JP | 2002200951 A | 16-07-2002 |
| | | | US | 2002087235 A1 | 04-07-2002 |
| US 2006235575 | A1 | 19-10-2006 | DE | 102006016746 A1 | 19-10-2006 |
| | | | GB | 2425189 A | 18-10-2006 |
| US 2002173882 | A1 | 21-11-2002 | NONE | | |
| WO 2007107935 | A | 27-09-2007 | CN | 101405171 A | 08-04-2009 |
| | | | EP | 1998989 A1 | 10-12-2008 |
| | | | US | 2009103319 A1 | 23-04-2009 |

EPO FORM P0459

**EP 2 127 989 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6542792 B, Schubert
- US 6292759 B
- US 6678631 B, Schiffmann